(19) Europäisches Patentamt
European Patent Office
Office européen des brevets

(11) **EP 3 234 327 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(21) Anmeldenummer: **15787553.5**

(22) Anmeldetag: **27.10.2015**

(51) Int Cl.:
**F02D 41/20** (2006.01)　　**F16K 37/00** (2006.01)
**H01F 7/18** (2006.01)

(86) Internationale Anmeldenummer:
**PCT/EP2015/074882**

(87) Internationale Veröffentlichungsnummer:
**WO 2016/096211 (23.06.2016 Gazette 2016/25)**

(54) **ELEKTRISCHE BESTIMMUNG VON KENNGRÖSSEN MAGNETISCHER SCHALTVENTILE**

ELECTRICAL DETERMINING OF CHARACTERISTIC VALUES OF MAGNETIC SWITCH VALVES

DÉTERMINATION ÉLECTRIQUE DE CARACTÉRISTIQUES DE SOUPAPES DE COMMANDE MAGNÉTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2014 DE 102014226505**

(43) Veröffentlichungstag der Anmeldung:
**25.10.2017 Patentblatt 2017/43**

(60) Teilanmeldung:
**19191465.4 / 3 597 891**

(73) Patentinhaber: **Robert Bosch GmbH**
**70442 Stuttgart (DE)**

(72) Erfinder: **DOMHAN, Michael**
**71229 Leonberg (DE)**

(56) Entgegenhaltungen:
WO-A1-2008/031656　　WO-A2-2005/009815
DE-A1- 3 730 523　　DE-A1-102007 031 552
US-A1- 2014 069 390

**Beschreibung**

Die vorliegende Erfindung betrifft eine Vorrichtung und ein Verfahren zur Bestimmung einer Kenngröße eines magnetischen Schaltventils auf elektrischem Wege.

Stand der Technik

Ein magnetisches Schaltventil wird geöffnet, indem ein bestromter Schaltmagnet ein bewegliches Schaltelement (Anker) gegen eine Rückstellkraft anzieht. Das Ventil wird wieder geschlossen, indem die Bestromung des Schaltmagneten unterbrochen wird. Der Anker fällt dann in seine Ausgangsposition zurück.

Besonders bei schnell schaltenden Ventilen dieser Art ist es nötig, den Schaltweg des Ankers genau einzustellen. Nur durch eine genaue Einstellung lassen sich die Steuergeschwindigkeit und die Robustheit gleichzeitig optimieren. Steuergeschwindigkeit und Robustheit haben dabei gegensätzliche Anforderungen: Für eine hohe Steuergeschwindigkeit sind möglichst kleine mechanische Schaltwege nötig, wobei ein bestimmter minimaler Schaltweg nicht unterschritten werden darf, um Drosseleffekte zu vermeiden. Mit zunehmenden Schaltweg nimmt auch die Geschwindigkeit zu, mit der der Anker beim Schließen des Ventils in seine Ausgangsposition zurückschnellt. Beim Erreichen der Endposition wirken nun große Kräfte, die die Dichtfläche des Ventils beschädigen können. Auf der anderen Seite macht gerade ein großer Schaltweg das Ventil robust gegen Effekte, die den Schaltweg verringern, beispielsweise Ablagerungen und Beläge. Weiterhin nimmt die Durchflussmenge im geöffneten Zustand des Ventils mit dem Schaltweg zu.

Grundlage für jede Optimierung des Schaltwegs ist, dass man ihn kennt. Dem betriebsbereiten Zustand des Ventils ist der Anker jedoch für eine mechanische oder optische Messung des Schaltwegs nicht zugänglich. Man behilft sich daher mit einer Abschätzung des Schaltweges aus der Zeit, die das Schaltventil von der einen bis zu anderen Endlage benötigt, oder mit Messungen des magnetischen Flusses. Die Abschätzung aus der Zeitmessung kann durch Reibung oder hydraulisches Kleben im Ventil stark verfälscht werden. Um aus Messungen des magnetischen Flusses auf dem Schaltweg schließen zu können, sind detaillierte Kenntnisse des Magnetkreises und des Ankers notwendig.

Weitere wichtige Kenngrößen, die sich bei längerem Gebrauch eines Ventils ändern und daher überwacht werden sollten, sind die Federkonstante der Rückstellkraft und der bei der Ventilbetätigung wirksame Reibungskoeffizient. Auch diese Kenngrößen sind im betriebsfertigen Zustand des Ventils bislang keiner hinreichend genauen Messung zugänglich.

DE 10 2007 031552 A1 zeigt ein Verfahren, in dem der Zeitverlauf beim Schalten zur Bestimmung der Kenngrößen herangezogen wird.

Aufgabe und Lösung

Es ist daher die Aufgabe der Erfindung, ein Verfahren und eine Vorrichtung zur Verfügung zu stellen, mit dem die genannten Kenngrößen genauer und/oder apparativ einfacher bestimmt werden können als nach dem bisherigen Stand der Technik.

Diese Aufgaben werden erfindungsgemäß gelöst durch ein Verfahren gemäß Hauptanspruch sowie durch eine Vorrichtung gemäß Nebenanspruch. Weitere vorteilhafte Ausgestaltungen ergeben sich aus den darauf rückbezogenen abhängigen Ansprüchen.

Offenbarung der Erfindung

Im Rahmen der Erfindung wurde ein Verfahren zur Bestimmung einer Kenngröße eines magnetischen Schaltventils entwickelt. Das magnetische Schaltventil ist durch die Bewegung eines Ankers mittels eines bestromten Schaltmagneten gegen eine konservative Rückstellkraft von einem geschlossenen Schaltzustand in einen geöffneten Schaltzustand umschaltbar. Die Erfindung funktioniert völlig analog an einem Schaltventil, das durch die Bewegung des Ankers gegen die Rückstellkraft von einem geöffneten Schaltzustand in einen geschlossenen Schaltzustand umschaltbar ist.

Die Kenngröße gehört einer Gruppe an, die umfasst:

-   die für die Umschaltung des Schaltventils vom geöffneten Schaltzustand in den geschlossenen Schaltzustand benötigte Zeit,
-   die Federkonstante der Rückstellkraft,
-   den bei der Ventilbetätigung wirksamen Reibungskoeffizienten und
-   den Schaltweg, den der Anker beim Übergang zwischen dem geschlossenen und dem geöffneten Zustand zurücklegt.

Erfindungsgemäß wird während der Umschaltung des Schaltventils von dem geöffneten in den geschlossenen Zustand unter Regelung der Spannung am Schaltmagneten auf einen konstanten Wert der Zeitverlauf des durch den Schaltmagneten fließenden Stroms und/oder der Spannung am Schaltmagneten gemessen. Die zu messende Kenngröße wird aus diesem Zeitverlauf ausgewertet.

Es wurde erkannt, dass jede Bewegung des Ankers gegen den Schaltmagneten in diesem eine Spannung induziert. Wird nun die Spannung am Schaltmagneten auf einen konstanten Wert geregelt, macht sich die durch die Bewegung induzierte Spannung zum Einen kurzfristig als Regelabweichung bemerkbar. Zum Anderen bewirkt die induzierte Spannung einen Stromfluss durch den Schaltmagneten. Aus beiden Signalen kann auf die Kinematik des Ankers zurückgeschlossen werden. Da der Schaltmagnet einen ohmschen Widerstand aufweist, wird durch den Stromfluss außerdem Energie dissipiert.

Diese Energie ist der Schlüssel zur Bestimmung des Schaltwegs, den der Anker beim Übergang zwischen dem geschlossenen und dem geöffneten Zustand zurücklegt. Wird das Ventil geschlossen und hierbei durch die am Schaltmagneten induzierte Spannung Energie dissipiert, muss es für diese Energie eine Quelle geben. Diese Quelle ist die potenzielle Energie, die bei der vorherigen Umschaltung vom geschlossenen in den geöffneten Zustand durch die mechanische Arbeit gegen die Rückstellkraft gespeichert wurde. Über das Kraftgesetz der Rückstellkraft ist dieser Energiemenge eindeutig ein Wert des Schaltwegs zugeordnet. Die Rückstellkraft kann beispielsweise eine Federkraft sein, aber auch eine auf den Anker wirkende Gravitationskraft. Somit wird in einer besonders vorteilhaften Ausgestaltung der Erfindung die bei der Umschaltung vom geschlossenen in den geöffneten Zustand durch die mechanische Arbeit gegen die Rückstellkraft gespeicherte potenzielle Energie, die beim Umschalten vom geöffneten in den geschlossenen Zustand durch die Bewegung des Ankers gegen den Schaltmagneten in elektrische Energie umgewandelt und an dessen ohmschem Widerstand dissipiert wird, aus dem Zeitverlauf des Stroms und/oder der Spannung ausgewertet.

Hierfür ist eine Kenntnis des ohmschen Widerstands des Schaltmagneten erforderlich. Vorteilhaft wird daher dieser Widerstandswert zusätzlich gemessen. Dieser Widerstandswert ist aber auch im Langzeitbetrieb des Schaltventils erfahrungsgemäß eine nicht oder nur langsam veränderliche Größe. Es reicht also aus, diesen Widerstandswert im Sinne einer Nacheichung in größeren Zeitabständen zu messen.

Am einfachsten ist die Auswertung, wenn während der Umschaltung des Schaltventils von dem geöffneten in den geschlossenen Zustand der Zeitverlauf des durch den Schaltmagneten fließenden Stroms unter Regelung der Spannung am Schaltmagneten auf einen konstanten Wert gemessen wird. Dies gilt insbesondere dann, wenn diese Spannung auf 0 Volt eingeregelt wird, beispielsweise indem der Schaltmagnet kurzgeschlossen wird. Die gesuchte Energie ist dann unmittelbar zugänglich, indem das Produkt eines quadrierten Stroms durch den ohmschen Widerstand des Schaltmagneten mit diesem Widerstand über den Schließvorgang des Schaltventils aufintegriert wird. Es kann aber auch eine andere Spannung als 0 Volt am Schaltmagneten eingeregelt oder aber auf eine aktive Regelung der Spannung gänzlich verzichtet werden, beispielsweise indem das Schließen des Schaltventils nicht durch Vorgabe eines Zeitverlaufs der Spannung am Schaltmagneten, sondern durch Vorgabe eines Zeitverlaufs des Stroms durch den Schaltmagneten bewirkt wird. Die durch Integration ermittelte Energie ist dann um das Integral des Produkts von Strom und Spannung am Schaltmagneten in den gleichen zeitlichen Grenzen des Schließvorgangs zu korrigieren.

Die Bewegung des Ankers gegen den Schaltmagneten induziert primär ein Spannungssignal. Erst der ohmsche Widerstand des Schaltmagneten macht hieraus einen messbaren Strom. Die Genauigkeit der Messung wird verbessert, wenn zusätzlich der Zeitverlauf der Spannung bei der Umschaltung vom geöffneten in den geschlossenen Zustand gemessen und zur Ermittlung der gesuchten Kenngröße herangezogen wird.

Für einige Ausgestaltungen der Auswertung ist es nötig, den zum Umschalten des Ventils vom geschlossenen Zustand in den geöffneten Zustand erforderlichen Strom oder die für dieses Umschalten erforderliche Spannung zu kennen. Vorteilhaft wird daher auch dieser Strom bzw. diese Spannung gemessen. Er kann beispielsweise aus dem Zeitverlauf des Stroms und/oder der Spannung bei der Umschaltung des Ventils vom geschlossenen in den geöffneten Zustand ausgewertet werden. In einem oder beiden dieser Zeitverläufe kann sich bei Erreichen des Stromwerts, bei dem das Ventil umschaltet, beispielsweise eine Regelabweichung oder ein Knick zeigen.

Beim Öffnen des Ventils durch Bestromung des Schaltmagneten wird Energie nicht nur durch die mechanische Arbeit gegen die Rückstellkraft im Ventil gespeichert. Ein weitaus geringerer Energiebetrag wird unabhängig vom Vorhandensein einer Rückstellkraft im aus Anker und Schaltmagnet gebildeten Magnetkreis gespeichert. Auch diese Energie wird beim Schließen des Ventils am ohmschen Widerstand des Schaltmagneten dissipiert. Der Schaltweg kann genauer aus der insgesamt dissipierten Energie bestimmt werden, wenn der auf dem Magnetkreis entfallende Energieanteil bekannt ist. Hierzu wird in einer besonders vorteilhaften Ausgestaltung der Erfindung der zeitliche Abklingverlauf ermittelt, mit dem bei im geöffneten und/oder geschlossenen Zustand festgehaltener Position des Ankers die im aus Anker und Schaltmagnet gebildeten Magnetkreis gespeicherte Energie dissipiert wird. Zur einfacheren Auswertung wird dieser Abklingverlauf vorteilhaft unter der Randbedingung ermittelt, dass der Schaltmagnet kurzgeschlossen ist oder dass die Spannung am Schaltmagneten auf einen konstanten Wert geregelt ist.

Der Abklingverlauf, mit dem bei im geöffneten Zustand festgehaltener Position des Ankers die im Magnetkreis gespeicherte Energie dissipiert wird, kann vorteilhaft durch eine Extrapolation des Zeitverlaufs des Stroms durch den Schaltmagneten ermittelt werden. Basis für die Extrapolation ist der Zeitraum, in dem die Bestromung des Schaltmagneten bereits unterbrochen wurde, der Anker sich jedoch noch nicht durch die Rückstellkraft in Bewegung gesetzt hat.

Der zeitliche Abklingverlauf, mit dem bei im geschlossenen Zustand festgehaltener Position des Ankers die im Magnetkreis gespeicherte Energie dissipiert wird, kann durch einen Kurvenfit an den Zeitverlauf des Stroms durch den Schaltmagneten und/oder an den Zeitverlauf der Spannung am Schaltmagneten ermittelt werden. Hierbei ist zu berücksichtigen, dass der Anker beim Schließen des Ventils nicht sofort ein für allemal seine geschlossene Endstellung erreicht, sondern an dieser Endstellung wiederholt abprallt. Da im Moment des Abprallens die auf den Anker wirkende Beschleunigung maximal ist, nimmt in diesem Moment auch die im Schaltmagneten induzierte Spannung und damit auch der durchfließende Strom ein lokales Maximum an. Da es auf die magnetische Energie im geschlossenen Zustand ankommt, wird der Kurvenfit an die Maxima gelegt, die im Verlauf des durch den Schaltmagnet fließenden Stroms und/oder der Spannung am Schaltmagneten beim Umschalten in den geschlossenen Zustand durch die wiederholtes Abprallen des Ankers an seiner Endstellung hervorgerufen werden.

Alternativ oder in Kombination hierzu kann der zeitliche Abklingverlauf, mit dem bei im geschlossenen Zustand festgehaltener Position des Ankers die im Magnetkreis gespeicherte Energie dissipiert wird, vorteilhaft durch eine separate Messung ermittelt werden. Hierbei wird der Abklingverlauf aus der zeitlichen Stromantwort des Schaltmagneten auf eine im geschlossenen Zustand angelegte Spannung, die zum Umschalten in den geöffneten Zustand nicht ausreicht, ermittelt. Dabei sind die Merkmale des Magnetkreises, die in diesem Abklingverlauf eingehen, auch bei langfristigem Betrieb des Schaltventils langsam oder gar nicht veränderliche Größen. Es reicht daher aus, diese Messung nur einmalig oder aber im Sinne einer Nachreichung in großen Zeitabständen durchzuführen.

Aus der insgesamt am ohmschen Widerstand des Schaltmagneten dissipierten Energiemenge kann die durch die mechanische Arbeit gegen die Rückstellkraft gespeicherte potenzielle Energie vorteilhaft extrahiert werden, indem sie als Integral über den Abklingverlauf für den geöffneten Zustand des Ankers zwischen einem ersten Zeitpunkt, zu dem sich der Anker beim Umschalten vom geöffneten in den geschlossenen Zustand durch die Wirkung der Rückstellkraft zu bewegen beginnt, und einem zweiten Zeitpunkt, zu dem der Anker bei diesem Umschalten erstmals an seiner Engstellung anschlägt, ausgewertet wird.

Alternativ oder in Kombination hierzu kann die durch Arbeit gegen die Rückstellkraft gespeicherte potenzielle Energie zum gleichen Zweck extrahiert werden, indem sie als Integral über den gemessenen Stromverlauf und/oder Spannungsverlauf zwischen einem ersten Zeitpunkt, zu dem sich der Anker beim Umschalten vom geöffneten in den geschlossenen Zustand durch die Wirkung der Rückstellkraft zu bewegen beginnt, und einem zweiten Zeitpunkt, zu dem der gemessene Stromverlauf bzw. der gemessene Spannungsverlauf den gleichen Stromwert bzw. Spannungswert aufweist wie der Abklingverlauf für den geschlossenen Zustand zum ersten Zeitpunkt, ausgewertet wird.

In einer besonders vorteilhaften Ausgestaltung der Erfindung wird der Zeitpunkt, zu dem der Zeitverlauf des Stroms durch den Schaltmagneten und/oder der Spannung am Schaltmagneten nach Beginn des Umschaltens vom geöffneten in den geschlossenen Zustand ein lokales Maximum erreicht, als ein Zeitpunkt gewertet, zu dem der Anker an seiner Endstellung anschlägt.

In einer weiteren besonders vorteilhaften Ausgestaltung der Erfindung wird als Zeitpunkt $t_1$, zu dem sich der Anker beim Umschalten von geöffneten in den geschlossenen Zustand durch die Wirkung der Rückstellkraft zu bewegen beginnt, derjenige Zeitpunkt gewertet, zu dem der Anker hierdurch ein Spannungs- bzw. Stromsignal im Schaltmagneten induziert.

Auf diese Weise lässt sich unmittelbar die für die Umschaltung des Schaltventils vom geöffneten Schaltzustand in den geschlossenen Schaltzustand benötigte Zeit ermitteln. Dies wiederum ist die Basis dafür, auch den bei der Ventilbetätigung wirksamen Reibungskoeffizienten zu ermitteln: diese Reibung dämpft das wiederholte Anschlagen des Ankers in seiner Endstellung, bis er dort schließlich endgültig verharrt. Aus der Dämpfungskurve der Maxima im Strom durch den Schaltmagneten bzw. in der Spannung am Schaltmagneten, die durch dieses wiederholte Anschlagen entstehen, lässt sich die Reibung auswerten: Die Information über die Größe der Reibung steckt im Wesentlichen in der Amplitudenabnahme von einem Maximum zum nächsten.

In der gleichen Dämpfungskurve ist auch die Information über die Federkonstante der Rückstellkraft enthalten: Sie steckt in der Zeitdifferenz zwischen den einzelnen Maxima.

Sofern nur die Dämpfungskurve von Interesse ist, kann alternativ während der Umschaltung des Schaltventils vom geöffneten in den geschlossenen Zustand anstelle der Spannung am Schaltmagneten der Strom durch den Schaltmagneten auf einen konstanten Wert geregelt werden. Es kann dann beispielsweise der Zeitverlauf der Spannung am Schaltmagneten während des Umschaltens als Dämpfungskurve herangezogen werden. Alternativ kann auch die Regelabweichung der Stromregelung als Dämpfungskurve herangezogen werden.

Das beim Öffnen und Schließen des Ventils vorgegebene Spannungs-/Stromprofil kann grundsätzlich vielfältig variiert werden. Der Schaltmagnet kann beispielsweise symmetrisch oder periodisch angesteuert werden. Durch eine periodische Ansteuerung kann beispielsweise eine Messreihe aufgenommen werden, über die gemittelt wird. Sofern nach dem Schließen des Ventils die zeitliche Stromantwort des Schaltmagneten auf eine Spannung, die zum Umschalten in dem geöffneten Zustand nicht ausreicht, ermittelt wird, kann vor dieser Messung eine definierte frei wählbare Pausenzeit abgewartet werden. Dadurch kann sichergestellt werden, dass vor Beginn der Messung das wiederholte Abprallen des Ankers an seiner Endstellung sicher abgeschlossen ist.

Der ohmsche Widerstand des Schaltmagneten kann beispielsweise ermittelt werden, indem im statischen, geöffneten Zustand des Ventils die am Schaltmagneten anliegende Spannung und der durch ihn fließende Strom ermittelt werden. Die Spannung muss nicht unmittelbar am Schaltmagneten gemessen bzw. auf einen konstanten Wert geregelt werden. Dies kann stattdessen zum Beispiel auch an der Klemmspannung am Netzgeräteausgang erfolgen. Der in der weiteren Auswertung verwendete ohmsche Widerstand des Schaltmagneten enthält dann auch den Widerstand der Zuleitung zwischen Netzgerät und Schaltmagnet.

Die Rückrechnung von der im Schaltmagneten dissipierten Energie auf den Schaltweg muss nicht notwendigerweise über die Federkonstante der Rückstellkraft erfolgen. Alternativ kann über andere Größen auf den Schaltweg zurückgerechnet werden, zum Beispiel über die Betrachtung des magnetischen Flusses im Luftspalt zwischen dem Ventilglied und dem Kern des Schaltmagneten.

Die Erfindung bezieht sich auch auf eine Vorrichtung zur Bestimmung von Kenngrößen eines magnetischen Schaltventils, das durch Bewegung eines Ankers mittels eines bestromten Schaltmagneten gegen eine konservative Rückstellkraft von einem geschlossenen Schaltzustand in einen geöffneten Schaltzustand umschaltbar ist.

Diese Vorrichtung weist erfindungsgemäß folgende Komponenten auf:

- eine Treibereinheit zur Beaufschlagung des Schaltmagneten mit einem Spannungs- oder Stromverlauf, der das Ventil vom geöffneten Schaltzustand in den geschlossenen Schaltzustand umschaltet;
- ein Messinstrument zur Messung des Zeitverlaufs des durch den Schaltmagneten fließenden Stroms und/oder der Spannung am Schaltmagneten während des Schließvorgangs sowie
- eine Auswerteeinheit, die aus diesem Zeitverlauf eine Kenngröße des magnetischen Schaltventils zu extrahieren vermag.

Nach dem zuvor Gesagten enthält dieser Zeitverlauf Informationen über eine Vielzahl von Kenngrößen magnetischer Schaltventile, da die Bewegung des Ankers gegen den Schaltmagneten in diesem eine Spannung und somit auch einen Stromfluss induziert. Somit kann aus dem Zeitverlauf des Stroms und/oder der Spannung auf die Kinematik des Ankers zurückgeschlossen werden. Besonders vorteilhaft vermag die Auswerteeinheit aus dem Zeitverlauf des Stroms und/oder der Spannung eine Kenngröße aus einer Gruppe extrahieren, wobei diese Gruppe umfasst:

- die für die Umschaltung des Schaltventils vom geöffneten Schaltzustand in den geschlossenen Schaltzustand benötigte Zeit,
- die Federkonstante der Rückstellkraft (4),
- den bei der Ventilbetätigung wirksamen Reibungskoeffizienten und
- den Schaltweg (AH), den der Anker (2) beim Übergang zwischen dem geschlossenen (A) und dem geöffneten (B) Zustand zurücklegt.

Dies sind zum Einen besonders wichtige Kenngrößen magnetischer Schaltventile. Zum Anderen sind gerade diese Größen besonders gut aus dem Zeitverlauf des Stroms und/oder der Spannung extrahierbar.

So lässt sich etwa der bei der Ventilbetätigung wirksame Reibungskoeffizient sehr einsichtig ermitteln: Beim Schließen des Ventils wird der Anker wiederholt in seiner Endstellung anschlagen, bis er dort schließlich endgültig verharrt. Diese Bewegung ist durch die Reibung gedämpft. Die Dämpfungskurve der Maxima im Strom durch den Schaltmagneten und/oder in der Spannung am Schaltmagneten, die durch das wiederholte Anschlagen entstehen, enthält in der Amplitudenabnahme von einem Maximum zum nächsten die Information über die Größe der Reibung.

Weiterhin enthält die Dämpfungskurve in der Zeitdifferenz zwischen den einzelnen Maxima auch die Information über die Federkonstante der Rückstellkraft.

Besonders vorteilhaft vermag die Auswerteeinheit aus dem Zeitverlauf des Stroms und/oder der Spannung den Zeitpunkt, zu dem sich der Anker beim Schließvorgang in Bewegung setzt, und/oder den Zeitpunkt, zu dem der Anker seine Endposition im geschlossenen Schaltzustand erreicht, zu extrahieren. Bereits diese Information liefert einen Teil der genannten Kenngrößen und ist ein guter Indikator für Veränderungen der Schaltcharakteristik des Ventils im Laufe der Zeit. Sie kann auch genutzt werden, um in einer Reihenuntersuchung nominell identischer Schaltventile Abweichungen zu erkennen.

Besonders vorteilhaft vermag die Auswerteeinheit sowohl den Zeitpunkt, zu dem sich der Anker beim Schließvorgang in Bewegung setzt, als auch den Zeitpunkt, zu dem der Anker seine Endposition im geschlossenen Schaltzustand erreicht, aus dem Zeitverlauf des Stroms (I) und/oder der Spannung (U) zu extrahieren. Dann ist die für den Schaltvorgang benötigte Zeit und somit die Schaltgeschwindigkeit bekannt. Diese ist eine sehr wichtige Kenngröße für magnetische Schaltventile.

Hierfür ist es besonders vorteilhaft, wenn die Vorrichtung in einer weiteren Ausgestaltung der Erfindung ein weiteres Messinstrument zur Messung des Zeitverlaufs der am Schaltmagneten anliegenden Spannung während des Schließvorgangs bzw. des Zeitverlaufs des durch den Schaltmagneten fließenden Stroms umfasst. Die Auswerteeinheit erhält dann sowohl den Zeitverlauf des Stroms als auch den Zeitverlauf der Spannung als Eingabe. Gerade aus dem Zeitverlauf der Spannung lässt sich der Zeitpunkt, zu dem der Anker sich beim Schließvorgang durch die Rückstellkraft zu bewegen beginnt, besonders gut bestimmen. Der Anker induziert wegen der anfangs geringen Geschwindigkeit relativ zum Schaltmagneten zunächst ein relativ schwaches Signal im Schaltmagneten, das primär ein Spannungssignal und als solches am genauesten zu detektieren ist.

In einer besonders vorteilhaften Ausgestaltung der Erfindung weist die Auswerteeinheit einen Integrator für den Zeitverlauf der am Schaltmagneten anliegenden Spannung und/oder für den Zeitverlauf des durch ihn fließenden Stroms auf. Dann kann die während des Schließvorgangs dissipierte Energie, die beim vorherigen Öffnen des Ventils durch mechanische Arbeit gegen die Rückstellkraft im Ventil gespeichert worden war, gemessen werden. Diese Energie kann beispielsweise mit Hilfe des Kraftgesetzes für die Rückstellkraft in den Schaltweg (AH) des Ventils umgerechnet werden.

Sämtliche für das Verfahren gegebene Offenbarung gilt ausdrücklich auch für die Vorrichtung und umgekehrt.

Weitere, die Erfindung verbessernde Maßnahmen werden nachstehend gemeinsam mit der Beschreibung der bevorzugten Ausführungsbeispiele der Erfindung anhand von Figuren näher dargestellt.

Ausführungsbeispiele

Es zeigt:

Figur 1: Ausführungsbeispiel der erfindungsgemäßen Vorrichtung.

Figur 2: Bestimmung des Schaltwegs unter Nutzung von Abklingverläufen, die an den gemessenen Zeitverlauf des Stroms durch den Schaltmagneten gefittet sind.

Figur 3: Bestimmung des Schaltwegs unter Nutzung eines nach dem Schließen des Ventils separat gemessenen Abklingverlaufs.

Figur 4: Bestimmung der Federkonstanten für die Rückstellkraft und des Reibungskoeffizienten für die Ventilbetätigung aus dem gemessenen Zeitverlauf des Stroms durch den Schaltmagneten.

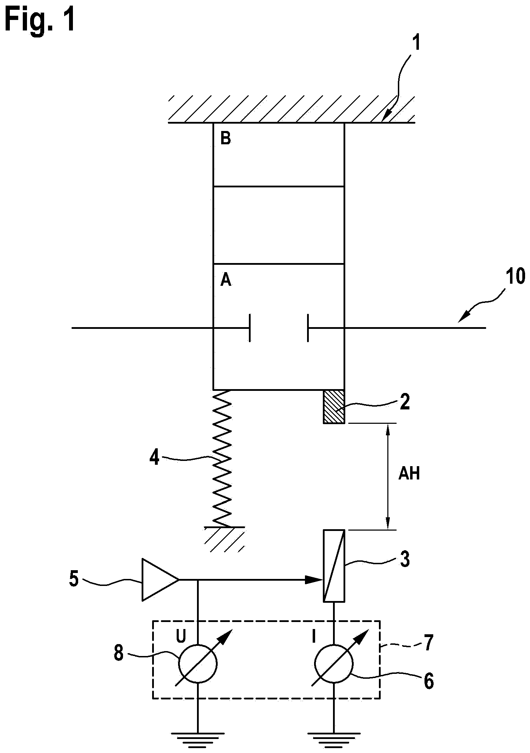

Figur 1 zeigt ein Ausführungsbeispiel der erfindungsgemäßen Vorrichtung. Das magnetische Schaltventil 1 sperrt hier im geschlossenen Schaltzustand A eine Leitung 10; im geöffneten Schaltzustand B gibt es den Durchfluss durch diese Leitung 10 frei. Das Schaltventil 1 wird gesteuert durch einen Anker 2, der mittels eines bestromten Schaltmagneten 3 gegen die Kraft einer Feder 4 vom geschlossenen Schaltzustand A in den geöffneten Schaltzustand B angezogen werden kann. Dabei legt der Anker 2 den Schaltweg (Ankerhub) AH zurück.

Es ist ein Universalnetzteil mit wahlweiser Spannungs- oder Stromvorgabe als Treibereinheit 5 vorgesehen. Diese Treibereinheit 5 vermag den Schaltmagneten 3 mit einem Spannungs- oder Stromverlauf zu beaufschlagen, der das Ventil 1 vom geöffneten Schaltzustand B in den geschlossenen Schaltzustand A umschaltet.

Weiterhin sind ein digitales Amperemeter 6 zur Messung des durch den Schaltmagneten 3 fließenden Stroms und ein digitales Voltmeter 8 zur Messung der am Schaltmagneten anliegenden Spannung vorgesehen. Die digitalen Ausgänge beider Instrumente werden einem Messrechner zugeführt, der als Auswerteeinheit 7 fungiert und jeweils den Zeitverlauf aufzeichnet. Der Messrechner ist mit einer Software ausgerüstet, die die Zeitpunkte, zu denen der Anker 2 sich beim Schließvorgang in Bewegung setzt und zu denen er im geschlossenen Schaltzustand A in seiner Endposition anschlägt, bestimmt. Damit sind die Federkonstante der Rückstellkraft 4, der Reibungskoeffizient bei der Ventilbetätigung und die zum Schließen des Ventils 1 benötigte Zeit bekannt. Die Software kann den Zeitverlauf der Spannung U und/oder des Stroms I auch numerisch integrieren, so dass auch der Ankerhub AH bestimmbar ist.

Damit ist die Vorrichtung ein kompakter Messplatz, mit dem alle wichtigen Kenngrößen magnetischer Schaltventile bestimmt werden können.

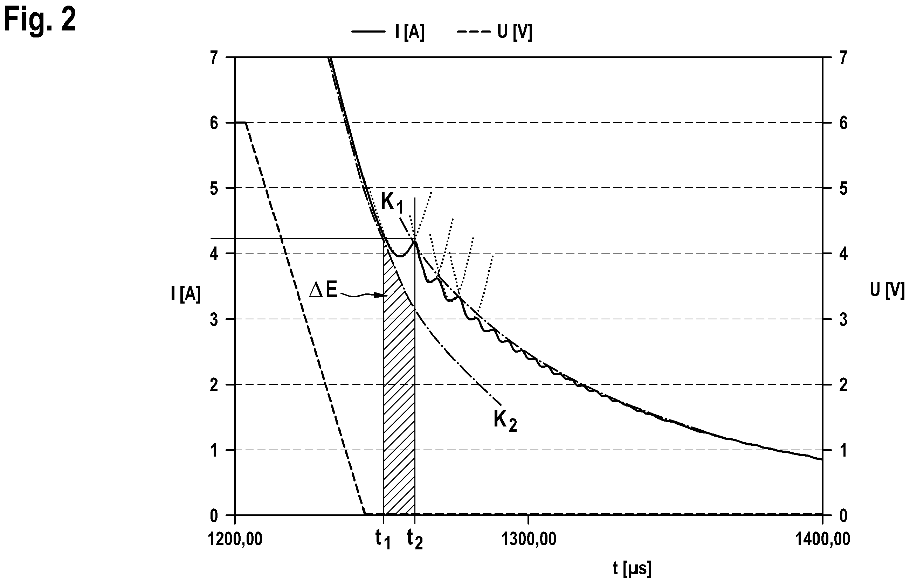

Figur 2 zeigt die Bestimmung des Schaltwegs AH gemäß einem Ausführungsbeispiel des erfindungsgemäßen Verfahrens. An den Schaltmagneten 3 wurde eine Spannung nach einem Zeitprofil angelegt, das durch die Kurve U wiedergegeben ist. Die Spannung wurde jeweils konstant auf einen Sollwert geregelt. Der gemessene Zeitverlauf des Stroms durch den Schaltmagneten ist in der Kurve I angegeben. Zu Beginn der Messung war der Schaltmagnet 3 mit einer konstanten Spannung beaufschlagt und somit bestromt. Dieser Strom reichte aus, um das Ventil 1 offen zu halten.

Anschließend wurde der Sollwert der Spannungsregelung für den Schaltmagneten 3 schlagartig auf 0 heruntergefahren. Die in der Kurve U angegebene, tatsächlich am Magneten 3 anliegende Spannung konnte hierauf naturgemäß nur mit einer endlichen Flankensteilheit reagieren. Der Strom I durch den Magneten 3 fiel daraufhin fast linear ab, bis der Anker 2 sich durch die Wirkung der Rückstellkraft 4 zu bewegen begann, was sich in einem Wendepunkt in der Stromkurve I manifestierte. An dem Bereich vor dem Wendepunkt ist die Kurve $K_2$ angefittet. Die Kurve $K_2$ gibt den zeitlichen Abklingverlauf an, mit dem bei im geöffneten Zustand festgehaltener Position des Ankers 2 die im aus Anker 2 und Schaltmagnet 3 gebildeten Magnetkreis gespeicherte Energie dissipiert wird.

Durch die Bewegung des Ankers 2 gegen den Schaltmagneten 3 wurde eine zusätzliche Spannung und damit auch ein zusätzlicher Strom durch den Schaltmagneten induziert. Dies führte dazu, dass der Abfall des Stroms durch den Schaltmagneten 3 zunächst abflachte, bis er sich schließlich sogar in einen Anstieg umkehrte. Zu dem Zeitpunkt, als der Anker 2 erstmals in seine Endposition einschlug, war die auf ihn wirkende Beschleunigung und damit auch der induzierte Strom am größten. Dies zeigt sich in einem lokalen Maximum in der Stromkurve I zum Zeitpunkt $t_2$. Der Zeitpunkt $t_1$, zu dem der Anker 2 sich aufgrund der Wirkung der Rückstellkraft in Bewegung zu setzen begann, wurde als der Zeitpunkt bestimmt, zu dem die Kurve $K_2$ den gleichen Stromwert aufwies wie die Kurve $K_1$ zum Zeitpunkt $t_2$ des ersten lokalen Maximums. Das Integral

$$\Delta E = \int\limits_{t_1}^{t_2} R_{MV} K_2^2 \, dt$$

über die Kurve $K_2$ zwischen den Zeiten ti und $t_2$ wurde als diejenige Energiemenge ausgewertet, die beim Öffnen des Ventils 1 durch Verrichtung mechanischer Arbeit gegen die Rückstellkraft 4 als potenzielle Energie gespeichert worden war. Die Rückstellkraft 4 wurde in diesem Ausführungsbeispiel durch eine herkömmliche Ventilfeder bereitgestellt.

Die ermittelte Energiemenge $\Delta E$ wurde über das Kraftgesetz für Federn in den Schaltweg (Ankerhub) AH umgerechnet, um den die Feder beim Öffnen des Ventils zusammengedrückt worden war. Dieser ist die Differenz

$$AH = s_1 - s_0$$

zwischen dem Gesamtspannweg $s_1$ der Feder, wenn das Ventilglied am oberen Anschlag ist, und dem Vorspannweg $s_0$ der Ventilfeder bei Einbau. Es gilt:

$$s_1 = \sqrt{\frac{2 \cdot E_{ges}}{D}} \text{ mit } E_{ges} = E_0 + \Delta E$$

worin $E_0$ die Energie in der ggfs. vorgespannten Feder ist.

Da die Vorspannkraft der schnell schaltenden Magnetventile nach Stand der Technik sehr genau eingestellt wird, ist die Energie $E_0$ nach

$$E_0 = \frac{1}{2} \cdot D \cdot s_0^2$$

sehr genau bekannt. D bezeichnet dabei die Federkonstante der Ventilfeder, die ebenfalls sehr genau bekannt ist.

Für Schaltventile mit und ohne Vorspannung durch eine Feder gilt also:

$$AH = -\frac{F_0}{D} + \sqrt{\frac{F_0^2}{D^2} + \frac{2R}{D} \int\limits_{t_1}^{t_2} I^2 \, dt}$$

mit

I...gemessener Strom
D... Federkonstante der Feder
$F_0$... Vorspannkraft der Feder

Der gesuchte Schaltweg (Ankerhub) lässt sich also aus der Messgröße I und den aus der Konstruktion und dem Zusammenbau des Ventils bekannten Größen D und $F_0$ eindeutig bestimmen.

Nach dem ersten Einschlag in der Endposition federte der Anker 2 noch mehrmals zurück, um anschließend jeweils erneut diese Endposition zu erreichen, was wiederum jeweils zu einem weiteren lokalen Maximum in der Stromkurve I führte. Zwischen dem Zeitpunkt $t_1$ und dem Zeitpunkt, zu dem der Anker 2 seine Endposition endgültig als Ruhelage einnimmt, verläuft der Strom I annähernd stückweise parabelförmig, wobei nach jedem lokalen Maximum eine neue Parabel beginnt. Einige dieser Parabeln sind in Figur 2 gepunktet eingezeichnet.

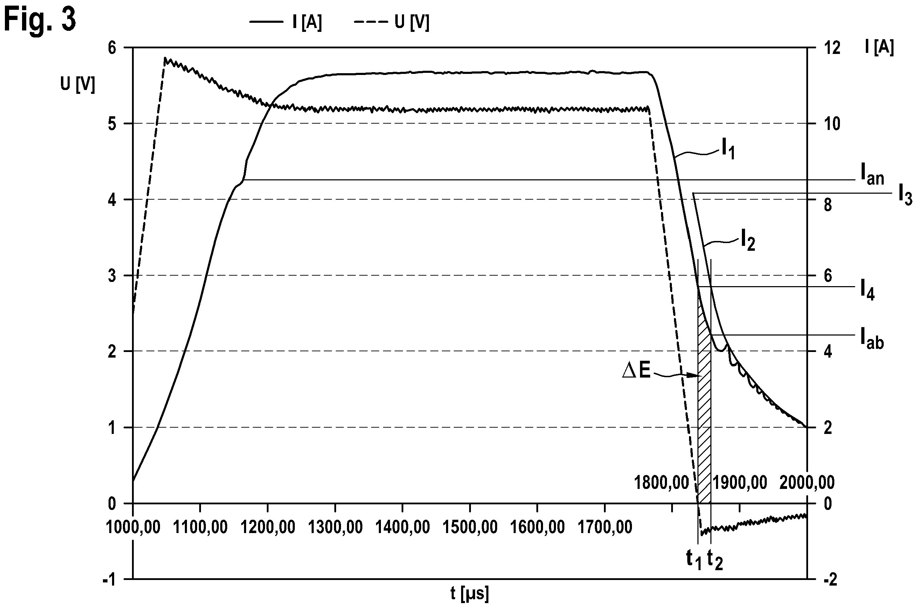

Figur 3 zeigt die Bestimmung des Schaltwegs AH mit einem weiteren Ausführungsbeispiel eines nicht erfindungsgemäßen Verfahrens, das ohne das Fitten von Kurven an den gemessenen Stromverlauf durch den Schaltmagneten auskommt. In dem Diagramm sind die Spannung U am Schaltmagneten, der durch den Schaltmagneten 3 fließende gemessene Strom $I_1$ sowie ein nach dem Schließen des Ventils 1 zur Bestimmung des Abklingverlaufs des Magnetkreises im geschlossenen Zustand gemessener Strom $I_2$ aufgetragen.

Die Spannungskurve U beginnt mit einem steilen Anstieg in Richtung des an der Spannungsregelung vorgegebenen Sollwerts. Sie vollführt einen Überschwinger über den Sollwert hinaus, bevor sie auf diesem Sollwert konstant bleibt. Der Strom durch den Schaltmagneten 3 hinkt der anliegenden Spannung aufgrund der Induktivität der Spule zeitlich hinterher. Das Ventil 1 ist zunächst noch im geschlossenen Zustand. Sobald der Strom durch den Schaltmagneten 3 ausreicht, um den Anker 2 in die geöffnete Position anzuziehen, zeigt sich ein Knick in der Stromkurve $I_1$. Der Stromwert, bei dem dies passiert, ist mit $I_{an}$ bezeichnet. Spannung U und Strom $I_1$ bleiben für eine gewisse Zeit konstant. Aus dem Quotienten $U/I_1$ wurde der ohmsche Widerstand $R_{MV}$ ermittelt. Anschließend wurde der Sollwert für die Spannung am Schaltmagneten 3 auf 0 heruntergefahren. Die tatsächliche Spannung U reagierte hierauf nur mit einer endlichen Flankensteilheit. Mit der Spannung am Schaltmagneten 3 fiel auch der durch den Schaltmagneten 3 fließende Strom $I_1$ ab. $I_1$ reichte zunächst noch aus, um das Ventil 1 offen zu halten. Zu einem Zeitpunkt $t_2$ überwog die Rückstellkraft 4 erstmals die verbleibende Haltekraft des Schaltmagneten 3, und der Anker 2 begann, sich in Richtung der geschlossenen Stellung in Bewegung zu setzen. Dieser Zeitpunkt ist in Figur 3 in der Spannungskurve U als kleine Regelabweichung erkennbar. Diese Regelabweichung ist in Figur 3 überlagert, durch einen Überschwinger, dem die Spannung U über ihren Sollwert 0 hinaus in den negativen Bereich vollführt.

Analog zur Figur 2 zeigen sich in Figur 3 im gemessenen Strom $I_1$ einige lokale Maxima, die dadurch verursacht wurden, dass der Anker 2 wiederholt an seiner geschlossenen Endposition anschlug. Nachdem der Anker 2 endgültig seine geschlossene Position erreicht hatte, wurde die Versorgung des Schaltmagneten 3 auf Stromregelung umgeschaltet und ein Stromwert $I_3$ eingeregelt, der unterhalb des Stromwerts $I_{an}$ zum Öffnen des Ventils 1 lag. Der tatsächlich fließende Strom wurde ausgehend vom rechten Rand des Diagramms in der Stromkurve $I_2$ aufgetragen, wobei auf der Zeitachse in rückwärtiger Richtung fortgeschritten wurde. Die Kurve $I_2$ ist die zeitliche Stromantwort des Schaltmagneten 3 auf eine im geschlossenen Zustand des Ventils 1 angelegte Spannung, die zum Umschalten in den geöffneten Zustand nicht ausreicht. Sie wurde als Abklingverlauf gewertet, mit dem bei in geschlossenen Zustand festgehaltener Position des Ankers 2 die in aus Anker 2 und Schaltmagnet 3 gebildete Magnetkreis gespeicherte Energie dissipiert wird.

Die beim Öffnen des Ventils durch die mechanische Arbeit gegen die Rückstellkraft 4 gespeicherte potenzielle Energie $\Delta E$ wurde nun als Integral

$$\left|\Delta E\right| = \int_{t_1}^{t_2} R_{MV} \cdot I_1^{\,2} dt$$

über den gemessenen Strom $I_1$ ausgewertet. Die rechte Integrationsgrenze ist der Zeitpunkt $t_2$, zu dem der Anker 2 die Bewegung in Richtung der geschlossenen Position begann. Die linke Integrationsgrenze $t_1$ ist der Zeitpunkt, zu dem der gemessene Strom $I_1$ den gleichen Stromwert $I_4$ aufwies wie die Abklingkurve $I_2$ zum Zeitpunkt $t_2$. Die Fläche unter der Kurve $I_1$, die der so bestimmten Energiemenge $\Delta E$ entspricht, ist in Figur 3 schraffiert dargestellt. Analog zur Figur 2 wurde auf dieser Energiemenge $\Delta E$ der Schaltweg AH bestimmt, um den die Feder beim Öffnen des Ventils zusammengedrückt worden war.

Beträgt die Spannung $U_{inj}$ am Injektor des Schaltmagneten 3 im Zeitraum zwischen $t_1$ und $t_2$ nicht 0 Volt, so ist die oben angegebene Formel zur Berechnung der Energiedifferenz $\Delta E$ wie folgt zu korrigieren:

$$\Delta E = \int_{t_1}^{t_2} U_{Inj} \cdot I_1 \; dt - \int_{t_1}^{t_2} R_{MV} \cdot I_1^{\,2} dt$$

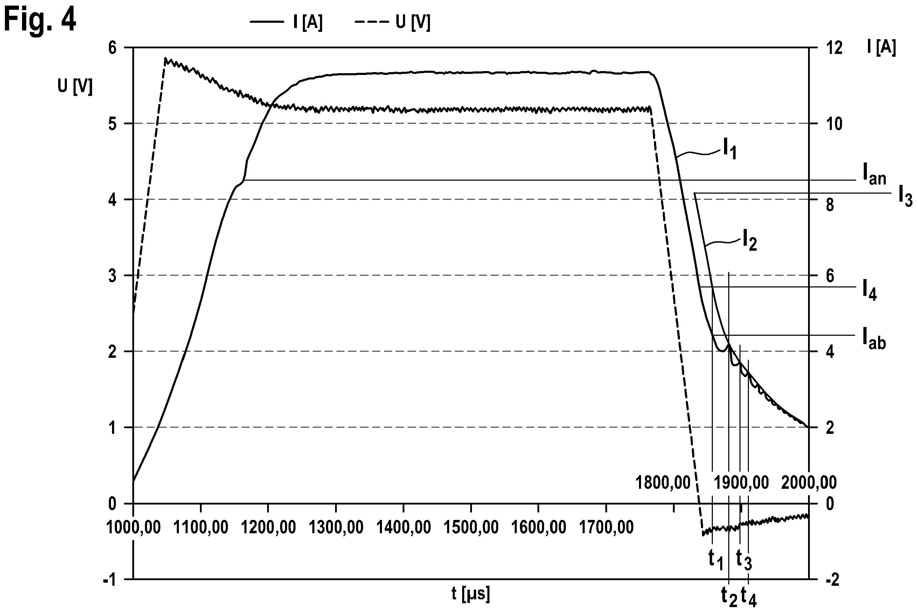

Figur 4 verdeutlicht die Bestimmung der Federkonstanten der Rückstellkraft 4 sowie die Bestimmung des Reibungskoeffizienten für die Ventilbetätigung anhand der in Figur 3 gezeigten Messdaten. $t_1$ bezeichnet hier den Zeitpunkt, zu dem der Anker 2 seine Bewegung in Richtung der geschlossenen Position begann; dieser Zeitpunkt ist in der Stromkurve U durch eine kleine Regelabweichung erkennbar. Zu den Zeitpunkten $t_2$, $t_3$ und $t_4$ schlug der Anker 2 jeweils an seiner Endposition an. In der Zeitdifferenz zwischen den Zeitpunkten $t_1$, $t_2$, $t_3$ sowie $t_4$ ist die Information über die Federkonstante der Ventilfeder 4 enthalten. Der Reibungskoeffizient für die Ventilbetätigung steckt in der Abnahme der Amplitude in der Stromkurve $I_2$ zwischen den einzelnen Maxima zu den Zeitpunkten $t_2$, $t_3$ und $t_4$.

**Patentansprüche**

1. Verfahren zur Bestimmung einer Kenngröße eines magnetischen Schaltventils (1), das durch Bewegung eines Ankers (2) mittels eines bestromten Schaltmagneten (3) gegen eine konservative Rückstellkraft (4) von einem ersten Schaltzustand (A) in einen zweiten Schaltzustand (B) umschaltbar ist, wobei der erste Schaltzustand entweder ein geschlossener oder ein geöffneter Schaltzustand und der zweite Schaltzustand entsprechend entweder der geöffnete oder der geschlossene Schaltzustand ist und wobei die Kenngröße einer Gruppe angehört, umfassend

   • die für die Umschaltung des Schaltventils vom zweiten Schaltzustand in den ersten Schaltzustand benötigte Zeit,
   • die Federkonstante der Rückstellkraft (4),
   • den bei der Ventilbetätigung wirksamen Reibungskoeffizienten und
   • den Schaltweg (AH), den der Anker (2) beim Übergang zwischen dem ersten (A) und dem zweiten (B) Zustand zurücklegt, wobei
   während der Umschaltung des Schaltventils (1) vom zweiten (B) in den ersten (A) Zustand der Zeitverlauf des durch den Schaltmagneten fließenden Stroms (I) und/oder der Spannung (U) am Schaltmagneten gemessen und die Kenngröße aus diesem Zeitverlauf ausgewertet wird, **dadurch gekennzeichnet, dass** der zeitliche Abklingverlauf ermittelt wird, mit dem bei im zweiten und/oder ersten Zustand festgehaltener Position des Ankers (2) die im aus Anker (2) und Schaltmagnet (3) gebildeten Magnetkreis gegen die Rückstellkraft gespeicherte potenzielle Energie im ohmschen Widerstand des Magnetkreises dissipiert wird, und dass die gespeicherte potentielle Energie als Integral über den Abklingverlauf für den zweiten Zustand (B) zwischen einem ersten Zeitpunkt, zu dem sich der Anker (2) beim Umschalten vom zweiten (B) in den ersten (A) Zustand durch die Rückstellkraft (4) zu bewegen beginnt, und einem zweiten Zeitpunkt, zu dem der Anker (2) bei diesem Umschalten erstmals an seiner Endstellung anschlägt, ausgewertet wird.

2. Verfahren nach Anspruch 1, **dadurch gekennzeichnet, dass** während der Umschaltung des Schaltventils (1) von dem zweiten (B) in den ersten (A) Zustand der Zeitverlauf des durch den Schaltmagneten fließenden Stroms (I) und/oder der Spannung (U) am Schaltmagneten unter Regelung der Spannung (U) am Schaltmagneten auf einen konstanten Wert gemessen wird.

3. Verfahren nach einem der Ansprüche 1 bis 2, **dadurch gekennzeichnet, dass** zusätzlich

   • der Zeitverlauf des Stroms (I) bei der Umschaltung vom ersten (A) in den zweiten (B) Zustand und/oder
   • der zum Umschalten des Ventils (1) vom ersten Zustand (A) in den zweiten Zustand (B) erforderliche Strom und/oder die für dieses Umschalten erforderliche Spannung und/oder
   • der Ohmsche Widerstand des Schaltmagneten (3) und/oder
   • der Zeitverlauf der Spannung (U) bei der Umschaltung vom ersten (A) in den zweiten (B) und/oder vom zweiten (B) in den ersten Zustand (A) gemessen und zur Ermittlung der Kenngröße herangezogen wird.

4. Verfahren nach einem der vorherigen Ansprüche, **dadurch gekennzeichnet, dass** der Abklingverlauf unter der Randbedingung ermittelt wird, dass der Schaltmagnet (3) kurzgeschlossen ist oder dass die Spannung (U) am Schaltmagneten (3) auf einen konstanten Wert geregelt ist.

5. Verfahren nach einem der vorherigen Ansprüche, **dadurch gekennzeichnet, dass** der Abklingverlauf

   • durch eine Extrapolation des Zeitverlauf des Stroms (I) und/oder der Spannung (U) auf der Basis des Zeitraums, in dem die Bestromung des Schaltmagneten (3) bereits unterbrochen wurde, der Anker (2) sich jedoch noch nicht durch die Rückstellkraft (4) in Bewegung gesetzt hat, und/oder
   • durch einen Kurvenfit an Maxima, die im Stromverlauf (I) und/oder im Spannungsverlauf (U) beim Umschalten in den ersten Zustand (A) durch wiederholtes Abprallen des Ankers (2) an seiner Endstellung hervorgerufen werden,
ermittelt wird.

6. Verfahren nach einem der vorherigen Ansprüche, **dadurch gekennzeichnet, dass** der Abklingverlauf aus der zeitlichen Stromantwort des Schaltmagneten (3) auf eine im ersten Zustand (A) angelegte Spannung, die zum Umschalten in den zweiten Zustand (B) nicht ausreicht, ermittelt wird.

7. Verfahren nach einem der vorherigen Ansprüche, **dadurch gekennzeichnet, dass** die gespeicherte potentielle Energie als Integral über den gemessenen Stromverlauf (I) und/oder Spannungsverlauf (U) zwischen einem ersten Zeitpunkt, zu dem sich der Anker (2) beim Umschalten vom zweiten (B) in den ersten (A) Zustand durch die Rückstellkraft (4) zu bewegen beginnt, und einem zweiten Zeitpunkt, zu dem der gemessene Stromverlauf (I) bzw. der gemessene Spannungsverlauf (U) den gleichen Stromwert bzw. den gleichen Spannungswert aufweist wie der Abklingverlauf für den ersten Zustand (A) zum ersten Zeitpunkt, ausgewertet wird.

8. Verfahren nach einem der vorherigen Ansprüche, **dadurch gekennzeichnet, dass** der Zeitpunkt, zu dem der Zeitverlauf des Stroms (I) und/oder der Spannung (U) nach Beginn des Umschaltens vom zweiten (B) in den ersten (A) Zustand ein lokales Maximum erreicht, als ein Zeitpunkt gewertet wird, zu dem der Anker (2) an seiner Endstellung anschlägt.

9. Verfahren nach einem der vorherigen Ansprüche, **dadurch gekennzeichnet, dass** als Zeitpunkt $t_1$, zu dem sich der Anker (2) beim Umschalten vom zweiten (B) in den ersten (A) Zustand durch die Rückstellkraft (4) zu bewegen beginnt, derjenige Zeitpunkt gewertet wird, zu dem der Anker (2) hierdurch ein Spannungs- bzw. Stromsignal im Schaltmagneten (3) induziert.

10. Vorrichtung zur Durchführung eines Verfahrens nach einem der vorherigen Ansprüche **gekennzeichnet durch**

   • eine Treibereinheit (5) zur Beaufschlagung des Schaltmagneten (3) mit einem Spannungs- oder Stromverlauf, der das Ventil (1) vom zweiten Schaltzustand (B) in den ersten Schaltzustand (A) umschaltet;
   • ein Messinstrument (6) zur Messung des Zeitverlaufs des durch den Schaltmagneten (3) fließenden Stroms (I) und/oder der Spannung (U) am Schaltmagneten während des Schließvorgangs sowie
   • eine Auswerteeinheit (7), die aus diesem Zeitverlauf (I) eine Kenngröße des magnetischen Schaltventils extrahiert.

11. Vorrichtung nach Anspruch 10, **dadurch gekennzeichnet, dass** die Auswerteeinheit (7) aus dem Zeitverlauf (I, U) eine Kenngröße aus einer Gruppe zu extrahieren vermag, wobei diese Gruppe umfasst:

   • die für die Umschaltung des Schaltventils vom zweiten Schaltzustand in den ersten Schaltzustand benötigte Zeit,
   • die Federkonstante der Rückstellkraft (4),
   • den bei der Ventilbetätigung wirksamen Reibungskoeffizienten und
   • den Schaltweg (ΔH), den der Anker (2) beim Übergang zwischen dem ersten (A) und dem zweiten (B) Zustand zurücklegt.

12. Vorrichtung nach einem der Ansprüche 10 bis 11, **dadurch gekennzeichnet, dass** die Auswerteeinheit (7) aus dem Zeitverlauf (I, U) den Zeitpunkt, zu dem sich der Anker (2) beim Schließvorgang in Bewegung setzt, und/oder den Zeitpunkt, zu dem der Anker (2) seine Endposition im ersten Schaltzustand (A) erreicht, zu extrahieren vermag.

13. Vorrichtung nach einem der Ansprüche 10 bis 12, **dadurch gekennzeichnet, dass** sie ein weiteres Messinstrument (8) zur Messung des Zeitverlaufs der am Schaltmagneten (3) anliegenden Spannung (U) bzw. des Zeitverlaufs des durch den Schaltmagneten (3) fließenden Stroms (I) während des Schließvorgangs umfasst, so dass die Auswerteeinheit (7) sowohl den Zeitverlauf des Stroms (I) als auch den Zeitverlauf der Spannung (U) als Eingabe erhält.

14. Vorrichtung nach einem der Ansprüche 10 bis 13, **dadurch gekennzeichnet, dass** die Auswerteeinheit (7) einen Integrator für den Zeitverlauf der Spannung (U) und/oder für den Zeitverlauf des Stroms (I) aufweist.

**Claims**

1. Method for determining a characteristic value of a magnetic switch valve (1), which can be switched from a first switch state (A) into a second switch state (B) by movement of a rotor (2) by means of a switching magnet (3) to which current is applied, against a conservative restoring force (4), wherein the first switch state is either a closed switch state or an open switch state and the second switch state is correspondingly either the open switch state or the closed switch state and wherein the the characteristic value belongs to a group, comprising:

   • the time required for switching the switch valve from the second switch state into the first switch state,
   • the spring constant of the restoring force (4),
   • the coefficient of friction effective during the valve actuation and
   • the switching path (AH), which the rotor (2) covers when switching between the first (A) and the second (B) state, wherein
   during the switching of the switch valve (1) from the second (B) into the first (A) state, the time course of the current (I) flowing through the switching magnet and/or of the voltage (U) at the switching magnet is measured, and the characteristic value is evaluated from this time course, **characterized in that** the time attenuation course is determined with which the potential energy stored in the magnetic circuit formed by the rotor (2) and the switching magnet (3) against the restoring force in the case of the position of the rotor (2) fixed in the second and/or first state is dissipated in the ohmic resistor of the magnetic circuit, and **in that** the stored potential energy is evaluated as an integral over the attenuation course for the second state (B) between a first point in time, at which the rotor (2) begins to move by means of the restoring force (4) when switching from the second (B) into the first (A) state, and a second point in time, at which the rotor (2) first strikes the end position thereof during said switching.

2. Method according to Claim 1, **characterized in that**, during the switching of the switch valve (1) from the second (B) into the first (A) state, the time course of the current (I) flowing through the switching magnet and/or of the voltage (U) at the switching magnet is measured while controlling the voltage (U) at the switching magnet to a constant value.

3. Method according to one of Claims 1 to 2, **characterized in that** additionally

   • the time course of the current (I) when switching from the first (A) to the second (B) state and/or
   • the current required for switching the valve (1) from the first state (A) into the second state (B) and/or the voltage required for this switching and/or
   • the ohmic resistance of the switching magnet (3) and/or
   • the time course of the voltage (U) when switching from the first (A) into the second (B) state and/or from the second (B) into the first state (A) is measured and used for determining the characteristic value.

4. Method according to one of the preceding claims, **characterized in that** the attenuation course is determined under the boundary condition that the switching magnet (3) is short-circuited or **in that** the voltage (U) at the switching magnet (3) is controlled to a constant value.

5. Method according to one of the preceding claims, **characterized in that** the attenuation course is determined

   • by an extrapolation of the time course of the current (I) and/or the voltage (U) on the basis of the time period in which the application of current to the switching magnet (3) has already been interrupted but the rotor (2) has not yet been set into motion by means of the restoring force (4), and/or
   • by a curve fit at maxima, which have been induced in the current course (I) and/or in the voltage course (U) when switching into the first state (A) by the repeated bouncing of the rotor (2) at the end position thereof.

6. Method according to one of the preceding claims, **characterized in that** the attenuation course is determined from the temporal current response of the switching magnet (3) to a voltage which is applied in the first state (A) and which is not sufficient for switching into the second state (B).

7. Method according to one of the preceding claims, **characterized in that** the stored potential energy is evaluated as an integral over the measured current course (I) and/or voltage course (U) between a first point in time, at which the rotor (2) begins to move by means of the restoring force (4) when switching from the second (B) into the first (A) state, and a second point in time, at which the measured current course (I) or respectively the measured voltage course (U) has the same current value or respectively the same voltage value as the attenuation course for the first state (A) at the first point in time.

8. Method according to one of the preceding claims, **characterized in that** the point in time at which the time course of the current (I) and/or the voltage (U) achieves a local maximum after the beginning of the switching from the second (B) into the first (A) state is evaluated as the point in time at which the rotor (2) strikes the end position thereof.

9. Method according to one of the preceding claims, **characterized in that** that point in time at which the rotor (2) hereby induces a voltage or respectively current signal in the switching magnet (3) is evaluated as the point in time $t_1$ at which the rotor (2) begins to move by means of the restoring force (4) when switching from the second (B) into the first (A) state.

10. Device for carrying out a method according to one of the preceding claims, **characterized by**

   • a driver unit (5) for applying to the switch magnet (3) a voltage or current course which switches the valve (1) from the second switch state (B) into the first switch state (A);
   • a measuring instrument (6) for measuring the time course of the current (I) flowing through the switch magnet (3) and/or the voltage (U) at the switch magnet during the closing operation and
   • an evaluation unit (7), which extracts a characteristic value of the magnetic switch valve from this time course (I).

11. Device according to Claim 10, **characterized in that** the evaluation unit (7) is able to extract from the time course (I, U) a characteristic value from a group, this group comprising:

   • the time required for switching the switch valve from the second switch state into the first switch state,
   • the spring constant of the restoring force (4),
   • the coefficient of friction effective during valve actuation and
   • the switching path (AH), which the rotor (2) covers when switching between the first (A) and the second (B) state.

12. Device according to one of either of Claims 10 and 11, **characterized in that** the evaluation unit (7) is able to extract from the time course (I, U) the point in time at which the rotor (2) is set in motion during the closing operation, and/or the point in time at which the rotor (2) reaches its end position in the first switch state (A).

13. Device according to one of Claims 10 to 12, **characterized in that** it comprises a further measuring instrument (8) for measuring the time course of the voltage (U) at the switch magnet (3) or the time course of the current (I) flowing through the switch magnet (3) during the switching operation, so that the evaluation unit (7) receives both the time course of the current (I) and the time course of the voltage (U) as an input.

14. Device according to one of Claims 10 to 13, **characterized in that** the evaluation unit (7) has an integrator for the time course of the voltage (U) and/or for the time course of the current (I).

**Revendications**

1. Procédé pour la détermination d'une grandeur caractéristique d'une soupape de commutation magnétique (1) qui peut être commutée par déplacement d'un induit (2) au moyen d'un aimant de commutation (3) parcouru par un courant à l'encontre d'une force de rappel conservative (4) d'un premier état de commutation (A) à un deuxième état de commutation (B), le premier état de commutation étant soit un état de commutation fermé soit un état de commutation ouvert et le deuxième état de commutation étant, de manière correspondante, soit l'état de commutation ouvert soit l'état de commutation fermé et la grandeur caractéristique appartenant à un groupe comprenant

   - le temps nécessaire pour la commutation de la soupape de commutation du deuxième état de commutation au premier état de commutation,
   - la constante de ressort de la force de rappel (4),
   - le coefficient de frottement agissant lors de l'actionnement de la soupape et
   - la distance de commutation (AH) qui est parcourue par l'induit (2) lors de la transition entre le premier état (A) et le deuxième état (B),
   où, au cours de la commutation de la soupape de commutation (1) du deuxième état (B) au premier état (A), on mesure l'allure dans le temps du courant (I) s'écoulant à travers l'aimant de commutation et/ou de la tension (U) au niveau de l'aimant de commutation et on analyse la grandeur caractéristique provenant de cette allure dans le temps,
**caractérisé en ce que**
l'on détermine la courbe de décroissance en fonction du temps, avec laquelle, en conservant la position de l'induit (2) dans le deuxième et/ou dans le premier état, l'énergie potentielle stockée à l'encontre de la force de rappel dans le circuit magnétique formé de l'induit (2) et de l'aimant de commutation (3) est dissipée dans la résistance ohmique du circuit magnétique, et **en ce que** l'on analyse l'énergie potentielle stockée sous forme d'intégrale de la courbe de décroissance pour le deuxième état (B) entre un premier instant, auquel l'induit (2) commence à se déplacer sous l'effet de la force de rappel (4) lors de la commutation du deuxième état (B) au premier état (A), et un deuxième instant, auquel l'induit (2), lors de cette commutation, vient buter pour la première fois contre sa position de fin de course.

2.  Procédé selon la revendication 1, **caractérisé en ce que** pendant la commutation de la soupape de commutation (1) du deuxième état (B) au premier état (A), on mesure l'allure dans le temps du courant (I) s'écoulant à travers l'aimant de commutation et/ou de la tension (U) au niveau de l'aimant de commutation en réglant la tension (U) au niveau de l'aimant de commutation à une valeur constante.

3.  Procédé selon l'une quelconque des revendications 1 et 2, **caractérisé en ce que** l'on mesure en outre

    - l'allure dans le temps du courant (I) lors de la commutation du premier état (A) au deuxième état (B) et/ou
    - le courant nécessaire pour la commutation de la soupape (1) du premier état (A) au deuxième état (B) et/ou la tension requise pour cette commutation et/ou
    - la résistance ohmique de l'aimant de commutation (3) et/ou
    - l'allure dans le temps de la tension (U) lors de la commutation du premier état (A) au deuxième état (B) et/ou du deuxième état (B) au premier état (A)
    et on les utilise pour déterminer la grandeur caractéristique.

4.  Procédé selon l'une quelconque des revendications précédentes, **caractérisé en ce que** la courbe de décroissance est déterminée à la condition marginale à laquelle l'aimant de commutation (3) est court-circuité ou à laquelle la tension (U) au niveau de l'aimant de commutation (3) est réglée à une valeur constante.

5.  Procédé selon l'une quelconque des revendications précédentes, **caractérisé en ce que** l'on détermine la courbe de décroissance

    - par extrapolation de l'allure dans le temps du courant (I) et/ou de la tension (U) sur la base de l'intervalle de temps durant lequel l'alimentation en courant de l'aimant de commutation (3) a déjà été interrompue, mais l'induit (2) ne s'est pas encore mis en mouvement sous l'effet de la force de rappel (4), et/ou
    - par un ajustement de la courbe à des maxima qui ont été provoqués dans l'allure du courant (I) et/ou de la tension (U) lors de la commutation dans le premier état (A) par une butée répétée de l'induit (2) contre sa position de fin de course.

6.  Procédé selon l'une quelconque des revendications précédentes, **caractérisé en ce que** la courbe de décroissance est déterminée à partir de la réponse du courant en fonction du temps de l'aimant de commutation (3) à une tension appliquée dans le premier état (A) qui ne suffit pas pour commuter dans le deuxième état (B).

7.  Procédé selon l'une quelconque des revendications précédentes, **caractérisé en ce que** l'énergie potentielle stockée est analysée en tant qu'intégrale de l'allure mesurée du courant (I) et/ou de l'allure mesurée de la tension (U) entre un premier instant auquel l'induit (2) commence à se déplacer lors de la commutation du deuxième état (B) au premier état (A) sous l'effet de la force de rappel (4), et un deuxième instant auquel l'allure mesurée du courant (I) ou l'allure mesurée de la tension (U) présente la même valeur de courant ou la même valeur de tension que la courbe de décroissance pour le premier état (A) au premier instant.

8.  Procédé selon l'une quelconque des revendications précédentes, **caractérisé en ce que** l'instant auquel l'allure dans le temps du courant (I) et/ou de la tension (U) atteint un maximum local après le début de la commutation du deuxième état (B) au premier état (A), est analysé comme étant l'instant auquel l'induit (2) bute contre sa position de fin de course.

9.  Procédé selon l'une quelconque des revendications précédentes, **caractérisé en ce que** l'on analyse en tant qu'instant $t_1$ auquel l'induit (2), lors de la commutation du deuxième état (B) au premier état (A), commence à se déplacer sous l'effet de la force de rappel (4), l'instant auquel l'induit (2) cause de ce fait un signal de tension ou de courant dans l'aimant de commutation (3).

10. Dispositif pour mettre en œuvre un procédé selon l'une quelconque des revendications précédentes, **caractérisé par**

   - une unité d'entraînement (5) pour solliciter l'aimant de commutation (3) avec une allure de tension ou de courant qui commute la soupape (1) du deuxième état de commutation (B) au premier état de commutation (A) ;
   - un instrument de mesure (6) pour mesurer l'allure dans le temps du courant (I) s'écoulant à travers l'aimant de commutation (3) et/ou de la tension (U) au niveau de l'aimant de commutation au cours de l'opération de fermeture et
   - une unité d'analyse (7) qui extrait, à partir de cette allure dans le temps (I), une grandeur caractéristique de la soupape de commutation magnétique.

11. Dispositif selon la revendication 10, **caractérisé en ce que** l'unité d'analyse (7) permet d'extraire à partir de l'allure dans le temps (I, U), une grandeur caractéristique à partir d'un groupe, ce groupe comprenant :

   - le temps nécessaire pour la commutation de la soupape de commutation du deuxième état de commutation au premier état de commutation,
   - la constante de ressort de la force de rappel (4) ,
   - le coefficient de frottement agissant lors de l'actionnement de la soupape et
   - la distance de commutation (AH) qui est parcourue par l'induit (2) lors de la transition entre le premier état (A) et le deuxième état (B).

12. Dispositif selon l'une quelconque des revendications 10 et 11, **caractérisé en ce que** l'unité d'analyse (7) permet d'extraire à partir de l'allure dans le temps (I, U) l'instant auquel l'induit (2) se met en mouvement lors de l'opération de fermeture et/ou l'instant auquel l'induit (2) atteint sa position de fin de course dans le premier état de commutation (A).

13. Dispositif selon l'une quelconque des revendications 10 à 12, **caractérisé en ce qu'**il comprend un instrument de mesure supplémentaire (8) pour mesurer l'allure dans le temps de la tension (U) s'appliquant à l'aimant de commutation (3) ou de l'allure dans le temps du courant (I) s'écoulant à travers l'aimant de commutation (3) pendant l'opération de fermeture, de telle sorte que l'unité d'analyse (7) acquière à la fois l'allure dans le temps du courant (I) ainsi que l'allure dans le temps de la tension (U) en tant qu'entrée.

14. Dispositif selon l'une quelconque des revendications 10 à 13, **caractérisé en ce que** l'unité d'analyse (7) présente un intégrateur pour l'allure dans le temps de la tension (U) et/ou pour l'allure dans le temps du courant (I).

# Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007031552 A1